Europäisches Patentamt

European Patent Office

Office européen des brevets

(11) Numéro de publication: **0 138 682**
**A2**

# (12) DEMANDE DE BREVET EUROPEEN

(21) Numéro de dépôt: **84401892.9**

(22) Date de dépôt: **21.09.84**

(51) Int. Cl.⁴: **F 24 D 11/00,** F 24 D 17/00,
F 24 H 1/20

(30) Priorité: **07.10.83 FR 8316016**

(43) Date de publication de la demande: **24.04.85**
**Bulletin 85/17**

(84) Etats contractants désignés: **DE FR IT**

(71) Demandeur: **COMPAGNIE FRANCAISE DE RAFFINAGE**
**Société anonyme dite:, 5, rue Michel-Ange,**
**F-75781 Paris Cedex 16 (FR)**

(72) Inventeur: **Boissonnet, Francisque, 11, rue Fauvet,**
**F-75018 Paris (FR)**
Inventeur: **Giordano, Jacques, Chemin Saint Bernard,**
**F-06220 Vallauris (FR)**
Inventeur: **Ligier, Guy, 2, Avenue Lamartine,**
**F-06600 Antibes (FR)**

(74) Mandataire: **Jolly, Jean-Pierre et al, Cabinet BROT et**
**JOLLY 83, rue d'Amsterdam, F-75008 Paris (FR)**

(54) **Dispositif permettant le stockage thermique à partir de deux sources énergétiques, et installation utilisant un tel dispositif.**

(57) L'invention concerne un dispositif permettant le stockage
thermique dans un réservoir de fluide du type comprenant une
source de chaleur située à l'extérieur du réservoir de stockage
et une source de chaleur d'appoint située à l'intérieur du réservoir et qui est mise en marche lorsque la température du fluide
situé à la partie supérieure du réservoir devient inférieure à une
température d'utilisation ou de consigne.
   Ce dispositif se caractérise en ce que la source de chaleur
d'appoint (20) est placée à la partie inférieure du réservoir de
stockage (14) à l'intérieur d'un tube-écran (24) disposé verticalement et en ce que la source de chaleur externe est également branchée à la partie inférieure du réservoir de stockage,
mais à l'extérieur dudit tube-écran.

## Dispositif permettant le stockage thermique à partir de deux sources énergétiques, et installation utilisant un tel dispositif.

La présente invention concerne une installation de stockage thermique dans un réservoir alimenté en fluide chaud à partir d'une source extérieure de chaleur, tout en possèdant une source thermique intégrée fonctionnant en appoint thermique.

Les installations classiques de chauffage à accumulation de chaleur comprennent généralement une source de chaleur telle que les capteurs solaires ou les chaudières alimentées au gaz, au fioul ou à tout autre combustible approprié, un circuit hydraulique de chauffage contenant un liquide caloporteur qui est mis en circulation entre la source de chaleur et un réservoir de stockage de chaleur par une pompe, et un circuit de soutirage comprenant une arrivée d'eau froide à la partie inférieure du réservoir et un départ d'eau chaude à sa partie supérieure, vers l'utilisation.

Le fonctionnement de la pompe de circulation est généralement commandé par une unité de régulation à deux sondes thermiques, dont l'une est montée à la sortie de la source de chaleur et l'autre est montée à la partie inférieure du réservoir de stockage. Ces sondes sont reliées électriquement à une unité de régulation conçue pour donner un ordre de marche à la pompe lorsque la température mesurée à la sortie de la source dépasse celle mesurée à la partie basse du réservoir de stockage de plus d'une valeur de consigne. Au contraire, si l'écart de température précédent descend en dessous d'une seconde valeur de consigne, l'unité de régulation interrompt le fonctionnement de la pompe.

Par la demande de brevet français N° 82 21 453, déposée le 21 Décembre 1982, au nom de la Demanderesse, il est connu d'utiliser, à la place de l'unité de régulation, une thermovanne susceptible d'orienter le fluide caloporteur arrivant de la source de chaleur soit vers le réservoir de stockage, lorsque la température de ce dernier est supérieure à celle régnant à la sortie de la source, soit vers la conduite de retour vers la source, dans le cas contraire.

Aussi bien l'unité de régulation que la thermovanne permettent d'éviter que, pendant les périodes de non fonctionnement de la source de chaleur, le fluide caloporteur, qui n'est plus réchauffé, ne vienne refroidir progressivement la masse d'eau chaude qui est contenue dans le réservoir.

Cependant, si de telles périodes de non fonctionnement venaient à se prolonger, ce qui arrive souvent dans le cas du chauffage par énergie solaire, par temps couvert ou la nuit, il s'avère nécessaire d'utiliser un dispositif de chauffage d'appoint qui permet de maintenir la température de l'eau à une valeur pratiquement constante.

Le dispositif de chauffage d'appoint est constitué en général par une résistance électrique intégrée à l'intérieur du réservoir de stockage et qui intervient lorsque l'énergie solaire est insuffisante ou fait défaut. Mais le positionnement d'une telle résistance à l'intérieur du réservoir de stockage pose de nombreux problèmes auxquels aucune solution satisfaisante n'a été proposée jusqu'à présent. En effet, si on plaçait cette résistance à la partie inférieure du réservoir, la température de celui-ci serait toujours supérieure à celle de la source de chaleur, de sorte que la pompe d'alimentation ne se mettrait jamais en marche. Ainsi, le réservoir ne serait chauffé que par l'énergie électrique d'appoint qui est une énergie chère, alors que la source d'énergie externe, telle que l'énergie solaire, qui est plus économique, serait peu ou pas utilisée. Ou alors il faudrait faire intervenir des systèmes régulateurs compliqués, qui interrompent l'alimentation de la résistance électrique dès que la température du réservoir a atteint une température prédéterminée et qui mettent en marche la pompe d'alimentation.

De même, il n'est pas intéressant de placer la résistance électrique d'appoint à la partie supérieure ou médiane du réservoir car elle ne chaufferait que la couche d'eau située au-dessus d'elle et laisserait pratiquement froide la masse d'eau située dans la partie inférieure du réservoir.

Enfin, le montage de la résistance électrique à travers la paroi latérale du réservoir de stockage est difficilement envisageable, parce qu'il est très difficile et coûteux à réaliser.

Il est vrai que le brevet européen 0 031 153 suggère une solution intéressante à ce problème, qui consiste à monter deux réservoirs en série, dont l'un est chauffé par la source de chaleur externe et l'autre par un échangeur de chaleur ou une résistance électrique d'appoint. Ainsi, l'eau est d'abord préchauffée dans le premier réservoir par la chaleur d'origine solaire, puis est chauffée à une température supérieure dans le second réservoir par la résistance électrique. Il devient donc possible de monter cette dernière à la partie inférieure du second réservoir, sans que son fonctionnement empêche la mise en marche de la pompe d'alimentation, comme c'est le cas pour les installations de chauffage qui n'utilisent qu'un seul réservoir.

Cependant, on conçoit qu'une telle installation à deux réservoirs soit pratiquement deux fois plus chère et plus encombrante que les installations classiques à un réservoir.

La présente invention vise à remédier aux inconvénients des installations de stockage thermique, de type chauffe-eau, et propose à cet effet un dispositif facilement adaptable à toutes les installations existantes. Elle permet de rentabiliser au maximum la source de chaleur externe par rapport à la source de chaleur d'appoint interne de l'installation.

Pour faciliter la compréhension de l'exposé qui va suivre, on entendra :

- par température de consigne, la température d'utilisation souhaitée par l'utilisateur de l'installation de stockage thermique ; cette température est mesurée à l'aide d'un capteur situé en principe dans la partie supérieure du réservoir de stockage et relié à un circuit électrique dont le rôle est de déclencher la libération des calories du chauffage d'appoint dès que la température détectée par le capteur est inférieure à celle de ladite température de consigne ;

- par source externe de chaleur, toute source de calories externe au réservoir de stockage qui, tout en étant plus économique que le chauffage d'appoint, est indépendante de la température de consigne ; le fluide caloporteur susceptible d'apporter les calories de la source externe peut provenir par exemple d'un capteur solaire, d'une chaudière externe alimentée au gaz, au fioule, au charbon, au bois ou à tout autre combustible approprié, ou d'une autre installation de stockage thermique telle qu'une installation géothermique ou une installation de stockage saisonnier ;

- par source de chaleur d'appoint, toute source de chaleur permettant d'apporter les calories nécessaires pour atteindre la température de consigne ; cette source d'appoint libère les calories nécessaires lorsque la température détectée par le capteur placé en principe à la partie supérieure du réservoir est inférieure à la température de consigne ; elle pourra être constituée par une résistance électrique, un chauffage utilisant un combustible tel que le gaz ou le fioule, ou une autre installation de stockage dont la température d'utilisation sera nécessairement supérieure à la température de consigne.

La présente invention a donc pour objet un dispositif permettant le stockage thermique dans un réservoir de fluide du type comprenant une source de chaleur située à l'extérieur du réservoir de stockage et une source de chaleur d'appoint pouvant être indifféremment située à l'intérieur ou à l'extérieur du réservoir et qui est mise en marche lorsque la température du fluide situé à la partie supérieure du réservoir devient inférieure à une température d'utilisation ou de consigne, ledit disppsitif étant caractérisé en ce que la chaleur provenant de l'une de ces sources, est introduite à la partie inférieure du réservoir de stockage à l'intérieur d'un tube-écran, disposé verticalement, et en ce que la chaleur provenant de l'autre source est également introduite à la partie inférieure du réservoir de stockage, mais à l'extérieur dudit tube-écran.

La présente invention étant particulièrement adaptée au stockage thermique dans un réservoir de fluide, comprenant :

- une source de chaleur externe, dite économique, située à l'extérieur du réservoir, telle qu'une source de type de capteur solaire, et

- une source de chaleur d'appoint, nécessaire pour atteindre une température de consigne pouvant être supérieure à celle de la source précédente, telle qu'une résistance électrique,

ledit dispositif est alors caractérisé en ce que la chaleur provenant de la source d'appoint est introduite à l'intérieur d'un tube-écran à la partie inférieure du réservoir de stockage et en ce que la chaleur de la source externe est également introduite à la partie inférieure du réservoir de stockage mais à l'extérieur dudit tube-écran.

Ainsi, lorsque la température de la source extérieure de chaleur est supérieure à la valeur de la température de consigne, la partie supérieure du réservoir de stockage sera réchauffée par effet thermosiphon et la source de chauffage d'appoint ne sera pas utilisée.

En revanche, lorsque la température de la source extérieure de chaleur est inférieure à celle de la température de consigne, tout en restant supérieure à celle de l'arrivée d'eau du réseau, qui est également branchée à la partie inférieure du réservoir de stockage, le dispositif objet de la présente invention permet de créer deux zones distinctes dans le réservoir de stockage :

- la partie supérieure de ce dernier, c'est-à-dire la partie située au-dessus du tube-écran, qui sera maintenue à la température de consigne par déclenchement de la source de chauffage d'appoint à l'intérieur du tube-écran;

- la partie inférieure du réservoir de stockage située à l'extérieur du tube-écran, qui sera portée par convection à la température de la source extérieure de chaleur.

Ainsi, lorsque l'utilisateur soutirera le fluide de la partie supérieure du réservoir, les calories du fluide provenant de la source externe passeront d'une zone à l'autre, et le chauffage d'appoint ne sera utilisé que pour fournir les calories nécessaires pour faire passer la température du fluide dans cette partie du réservoir, de la température de la source externe à celle de la température de consigne.

Le dispositif selon la présente invention permet donc de donner une priorité à la source de chaleur externe plus économique, sur la source de chaleur d'appoint.

Le tube-écran a donc pour rôle de guider le courant d'eau chaude de la source d'appoint vers le haut du réservoir de stockage et de l'empêcher de venir se mélanger à la couche d'eau relativement plus froide qui se trouve à la partie inférieure, à l'extérieur du tube-écran, ce qui aurait pour effet de réchauffer ladite eau froide et de mettre hors service la source extérieure de chaleur, comme on l'a expliqué précédemment.

Le tube-écran sera donc avantageusement constitué de manière à former une paroi isolante thermiquement entre la zone dans laquelle est introduite la chaleur de la source d'appoint et celle dans laquelle est branchée la source extérieure de chaleur. On pourra, à cet effet, mais à titre non limitatif, réaliser le tube-écran en une matière plastique isolante, en particulier un "PVC" bullé, que l'on pourra éventuellement renforcer par une ou plusieurs armatures métalliques. En outre, pour faciliter le montage ou l'adaptation du tube-écran, ce dernier peut être constitué de plusieurs tubes emboîtables et rétractables les uns dans les autres.

La hauteur et la section transversale du tube-écran pourront en outre varier en fonction de l'importance relative de la capacité thermique de chacune des sources calorifiques. Cette hauteur pourra en particulier être plus ou moins grande suivant la capacité de chaleur externe dont pourra disposer l'utilisateur du réservoir de stockage. Dans les pays à fort taux d'ensoleillement, cette hauteur pourra en particulier être plus grande que dans les pays à taux d'ensoleillement plus faible. Dans la plupart des cas, le rapport entre la hauteur du réservoir de stockage et celle du tube-écran pourra varier entre 1,1 et 5. En particulier, la hauteur du tube-écran pourra être adaptée facilement et économiquement selon la saison (adaptation été ou hiver) aux besoins réels de l'utilisateur grâce à l'utilisation de tube-écran emboîtable et rétractables.

Enfin, dans les pays relativement froids, pour lesquels un antigel est nécessaire dans le circuit d'alimentation de la source externe, on utilisera avantageusement un échangeur de chaleur.

Lorsque la température de consigne n'est pas atteinte dans la partie supérieure du réservoir de stockage se trouvant directement au-dessus du tube-écran, un capteur de température, tel qu'un thermostat placé dans cette zone déclenche le chauffage d'appoint. Selon un mode avantageux de mise en oeuvre de la présente invention, le capteur de température pourra être placé dans la partie supérieure du réservoir ou au voisinage et à l'extérieur de l'extrémité supérieure du tube-écran.

Le tube-écran selon la présente invention peut présenter dans sa forme un certain nombre de variantes, la plus simple de celles-ci étant celle d'un tube tel que décrit précédemment.

Dans un second mode de réalisation de l'invention, le tube-écran peut être intégré dans un ensemble en forme de bouteille à goulot relativement étroit. Une telle forme permet d'assurer un meilleur guidage du courant ascendant d'eau chaude vers la partie supérieure du réservoir et d'éviter ainsi la diffusion latérale de la chaleur vers la zone inférieure du réservoir située à l'extérieur du tube-écran, ainsi que la création de turbulences engendrées par le mouvement de convection de l'eau chaude. Un avantage supplémentaire de ce mode de réalisation est de permettre à l'utilisateur d'utiliser instantanément la chaleur d'appoint lorsque le goulot remonte directement jusqu'en haut du réservoir, sans attendre que toute la partie supérieure dudit réservoir ait atteint la température de consigne. Dans ce mode de réalisation du tube-écran, les parties supérieures et inférieures du réservoir de stockage sont délimitées par des trous latéraux destinés à permettre l'introduction à l'intérieur du tube-écran du fluide se trouvant à la température de la source externe. Le capteur de température pourra dans ce cas être placé dans la partie supérieure du réservoir à l'extérieur du tube-écran au-dessus de ou au voisinage de ces trous latéraux.

Dans un troisième mode de réalisation de l'invention, le tube-écran pourra également être intégré dans un ensemble en forme d'une bouteille à goulot relativement étroit, mais avec des trous latéraux qui seront cette fois remplacés par un ou plusieurs tuyaux. La partie supérieure du ou des tuyaux, qui pourra être située à l'extérieur de la bouteille, délimite ainsi les parties supérieures et inférieures du réservoir précédemment décrites. La partie inférieure du ou des tuyaux pourra avantageusement être située à l'intérieur du tube-écran au-dessous de l'arrivée de la chaleur provenant de la source de chaleur d'appoint, permettant ainsi de faciliter la convection thermique. Un avantage supplémentaire de ce dispositif réside dans le fait que le capteur de température pourra être placé à l'intérieur du ou des tuyaux.

Avantageusement, le tube-écran, la source interne de chaleur, le thermostat, ainsi que les raccordements de la source externe de chauffage, sont groupés en un ensemble unitaire, susceptible d'être monté à travers une ouverture formée dans le fond du réservoir de stockage.

A titre illustratif, on décrira à présent plusieurs modes de réalisation particuliers de l'invention, en regard des dessins annexés, dans lesquels :

- la figure 1 montre, en coupe axiale, le principe d'un réservoir de stockage de la chaleur utilisant un tube-écran selon un premier mode de réalisation ;

- la figure 2 est une vue partielle, analogue à la figure 1, d'une installation de stockage de la chaleur dans laquelle le liquide caloporteur venant de la source externe contient un antigel ;

- les figures 3A et 3B sont des vues en coupe axiale d'un tube-écran selon un second et un troisième modes de réalisation ;

- la figure 4 est une vue en coupe d'une installation de stockage de chaleur équipée d'un ensemble monobloc portant le tube-écran et les organes annexes.

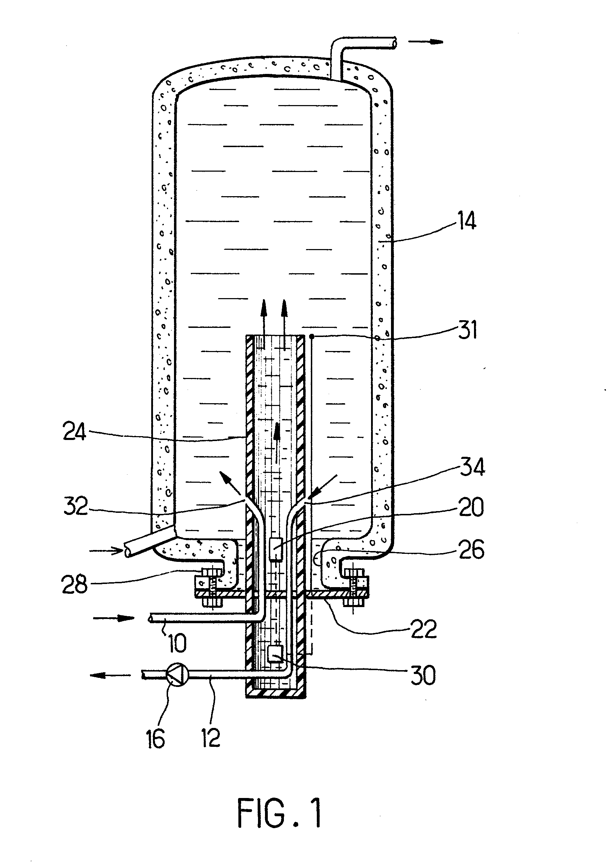

Avec référence tout d'abord à la figure 1, l'installation de chauffage comprend, de façon connue en soi, une source extérieure de chaleur, non représentée, qui peut être constituée, par exemple, par des capteurs solaires, ou par une chaudière alimentée au gaz, au fioul ou par tout autre combustible. Un liquide caloporteur véhiculant les calories de la source de chaleur circule dans un circuit comprenant une conduite d'arrivée 10 et une conduite de retour 12 branchées dans la paroi inférieure d'un réservoir de stockage de la chaleur 14. Le liquide caloporteur est mis en circulation dans le circuit au moyen d'une pompe 16, dont le fonctionnement peut être commandé par une unité de régulation classique, non représentée.

Dans la partie inférieure du réservoir de stockage est monté un dispositif de chauffage d'appoint 20 enfermé à l'intérieur d'un tube-écran vertical 24 en matériau isolant, qui est emmanché à travers une plaque amovible 22 constituant la paroi de fond du réservoir de stockage ; ladite plaque est fixée avec étanchéité sur une ouverture 26 du réservoir au moyen de boulons de serrage 28. Le tube-écran est de préférence cylindrique, et il est ouvert à son extrémité supérieure.

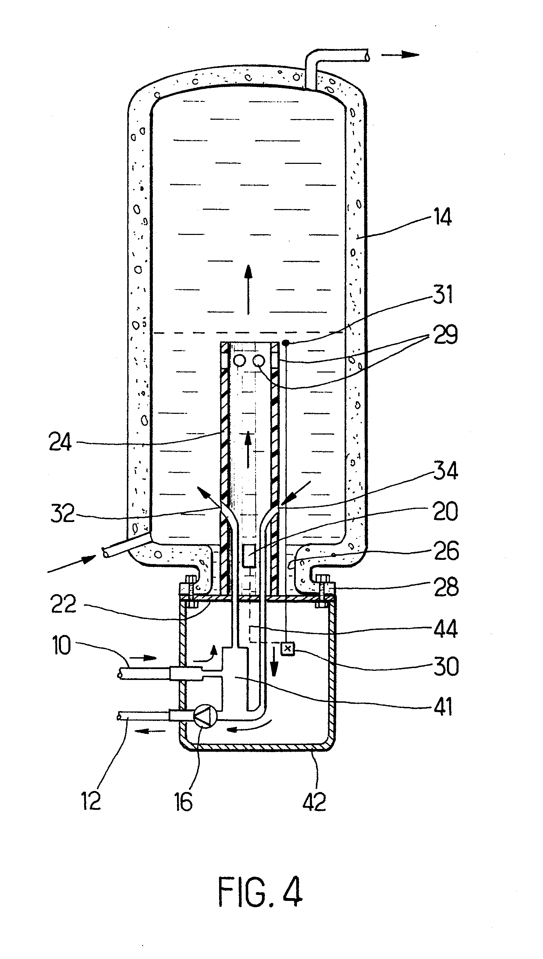

Dans une variante de réalisation illustrée par la figure 4, le tube-écran 24 présente, au voisinage de son extrémité supérieure, une pluralité de trous 29, par lesquels le liquide du réservoir peut pénétrer à l'intérieur du tube-écran.

La conduite d'arrivée 10 et la conduite de retour 12 débouchent dans la partie inférieure du réservoir de stockage à l'extérieur du tube-écran 24. Cependant, afin de permettre un passage aisé des conduites à travers l'ouverture 26, ces dernières passent de préférence à l'intérieur du tube-écran et débouchent, à travers des orifices 32, 34 de celui-ci, dans la partie inférieure du réservoir de stockage.

Le déclenchement de la source d'appoint 20 est commandé par un thermostat 30, lorsqu'un capteur 31 détecte, au niveau de l'extrémité supérieure du tube-écran 24, une température inférieure à une température de consigne.

Le fonctionnement du dispositif de la figure 1 est le suivant : lorsque la source externe de chaleur ne fonctionne pas, l'eau du réservoir de stockage 14 se refroidit progressivement. Dès que la température détectée à l'extrémité supérieure du tube-écran 24 devient inférieure à la chaleur de consigne, le thermostat 30 commande la mise en marche de la source d'appoint 20, laquelle réchauffe l'eau qui se trouve à l'intérieur du tube-écran 24. Par effet thermosiphon, cette eau remonte le long du tube écran jusqu'à arriver à la partie supérieure du réservoir de stockage 14. L'eau chaude ainsi produite réchauffe donc progressivement l'eau du réservoir à partir des couches supérieures. Lorsque la température au niveau de l'extrémité supérieure du tube-écran 24 devient supérieure à la température de consigne, le thermostat 30 arrête le fonctionnement de la source d'appoint.

Lorsque la source externe de chaleur se remet en marche, elle chauffe la partie inférieure du réservoir de stockage extérieure au tube-écran 24, par effet thermosiphon. La chaleur est communiquée aux couches supérieures du réservoir, lorsque la température de la source externe devient supérieure à la température de consigne : le thermostat 30 commande l'arrêt du fonctionnement de la source d'appoint 20.

Si un utilisateur soutire de l'eau à la partie supérieure du réservoir, le fluide situé à l'extérieur du tube-écran s'élèvera dans le réservoir et sera remplacé à la partie basse du réservoir par du fluide en provenance du réseau et ce dernier pourra alors être chauffé à l'aide de la chaleur provenant de la source externe.

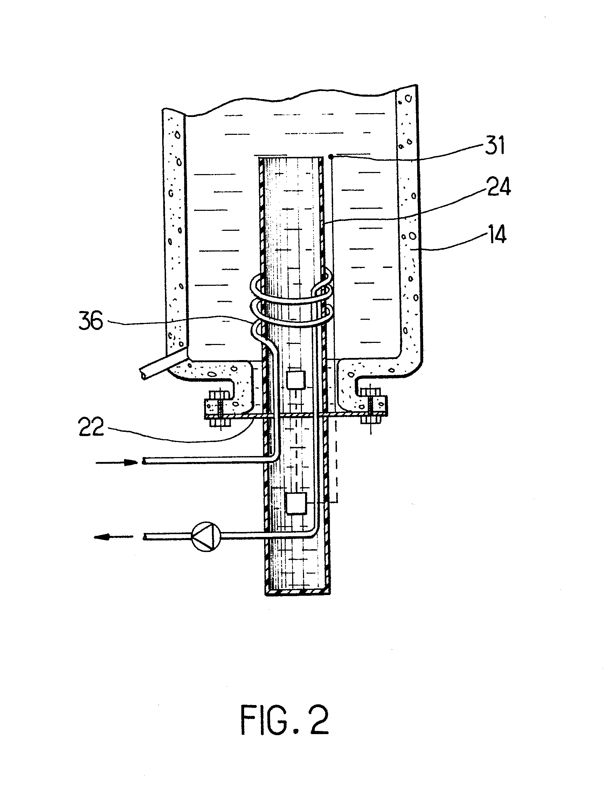

Dans le mode de réalisation de la figure 2, le fluide caloporteur contient un antigel. La conduite d'arrivée et la conduite de retour du fluide caloporteur ne débouchent pas dans le réservoir de stockage. Le liquide caloporteur cède ses calories au liquide du réservoir de stockage 14, par l'intermédiaire d'un échangeur de chaleur 36 qui entoure le tube-écran 24.

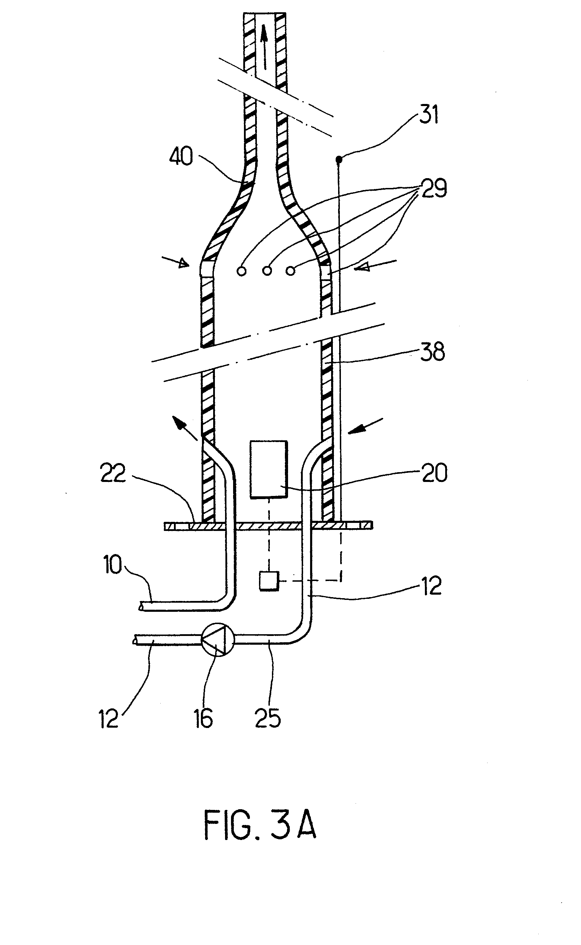

La figure 3A montre un tube-écran 38 intégré dans un ensemble en forme de bouteille. Cette forme est avantageuse, car le goulot 40 permet de guider vers le haut du réservoir le courant de liquide chauffé par la source d'appoint 20, en évitant sa diffusion latérale et la création de turbulences de convection à la sortie du tube-écran. Les trous 29, pour l'entrée du liquide à la température de la source externe, sont formés à la partie supérieure de la paroi cylindrique du tube-écran.

0138682

11

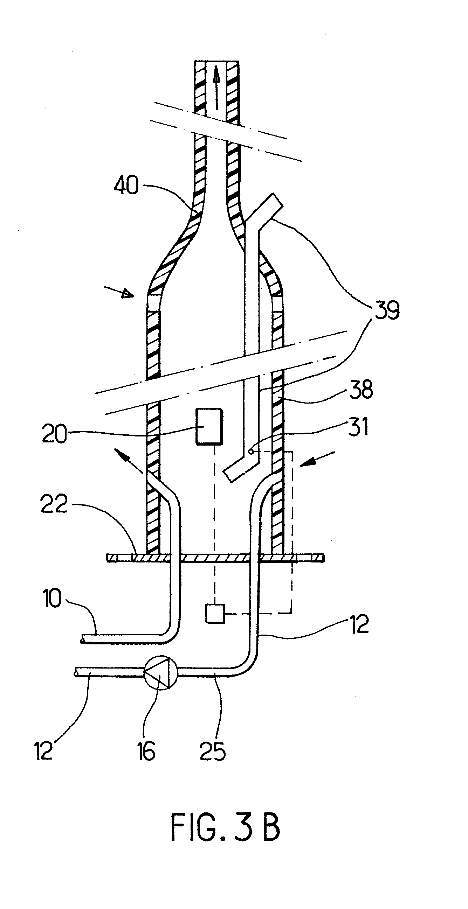

La figure 3B montre le même ensemble en forme de bouteille dans lequel les trous sont remplacés par des tuyaux destinés à faciliter la convection thermique à l'intérieur du tube écran ; l'un de ces tuyaux, dont la forme peut être très diverse, est représenté ici en 39. Le thermostat 31 est ici placé à l'intérieur dudit tube 39 dans le tube-écran.

Dans le cas de la figure 4, la pompe 16, la thermovanne 41, notamment du type de celle décrite sur la demande de brevet français N° 82 21 453, du 21 Décembre 1982, au nom de la Demanderesse, le thermostat 30 et les raccords pour les conduites d'arrivée 10 et de retour 12 sont groupés à l'intérieur d'un boîtier 42, dont le couvercle est constitué par la plaque de fond 22 du réservoir de stockage.

Cet ensemble, qui porte, sur la face externe de son couvercle, le tube-écran 24 et la source d'appoint 20, formé un bloc unitaire prêt à être monté sur un réservoir de stockage existant, sans modification de ce dernier.

0138682

R E V E N D I C A T I O N S

1 - Dispositif permettant le stockage thermique dans un réservoir de fluide du type comprenant une source de chaleur située à l'extérieur du réservoir de stockage et une source de chaleur d'appoint pouvant être indifféremment située à l'intérieur ou à l'extérieur du réservoir et qui est mise en marche lorsque la température du fluide situé à la partie supérieure du réservoir devient inférieure à une température d'utilisation ou de consigne, ledit dispositif étant caractérisé en ce que la chaleur provenant de l'une de ces sources (20) est introduite à la partie inférieure du réservoir de stockage (14) à l'intérieur du tube-écran (24 ; 38) disposé verticalement et en ce que la chaleur provenant de l'autre source est également introduite à la partie inférieure du réservoir de stockage, mais à l'extérieur dudit tube-écran.

2 - Dispositif selon la revendication 1, caractérisé en ce que le tube-écran est réalisé en une matière thermiquement isolante, éventuellement renforcée par une ou plusieurs armatures métalliques.

3 - Dispositif selon l'une des revendications 1 et 2, caractérisé en ce que, dans le cas où un antigel est incorporé dans le circuit d'alimentation (10, 12) de la source externe de chaleur, les calories du fluide caloporteur sont cédées au réservoir de stockage par l'intermédiaire d'un échangeur de chaleur (36).

4 - Dispositif selon l'une des revendications 1 à 3, caractérisé en ce que la chaleur de la source de chaleur d'appoint (20) est introduite à la partie inférieure du réservoir de stockage (14) à l'intérieur d'un tube-écran (24, 38) disposé verticalement et en ce que la chaleur provenant de la source de chaleur externe est introduite également à la partie inférieure du réservoir de stockage mais à l'extérieur dudit tube-écran.

5 - Dispositif selon l'une des revendications précédentes, caractérisé en ce que le tube-écran (24) est cylindrique.

6 - Dispositif selon l'une des revendications 1 à 5, caractérisé en ce que le tube-écran (38) est intégré dans un ensemble en forme de bouteille dont le goulot relativement étroit peut remonter jusqu'à la partie supérieure du réservoir.

7 - Dispositif selon la revendication 6, caractérisé en ce que le tube-écran présente, au voisinage de son extrémité supérieure et en dessous du goulot de l'ensemble en forme de bouteille, des trous pour l'entrée du liquide du réservoir de stockage.

8 - Dispositif selon la revendication 6, caractérisé en ce que la convection à l'intérieur du tube-écran est facilitée par l'introduction à travers la paroi d'un ou de plusieurs tuyaux (39) par lequel le fluide provenant de la partie supérieure du réservoir descend verticalement pour être ramené au-dessous de l'arrivée de chaleur provenant de la source d'appoint.

9 - Dispositif selon l'une des revendications précédentes caractérisé en ce que la température de consigne est détectée par un capteur (31) placé dans la partie supérieure du réservoir ou au voisinage et à l'extérieur de l'extrémité supérieure du tube-écran, ou encore dans le ou les tuyaux (39) destinés à faciliter la convection.

10 - Dispositif selon l'une des revendications 1 à 9, caractérisé en ce que le rapport entre la hauteur du réservoir de stockage (14) et celle du tube-écran (24, 38) est compris entre 1:1 et 5.

11 - Dispositif selon l'une des revendications 1 à 10, caractérisé en ce que les éléments du tube-écran sont constitués de portions de tubes emboîtables et rétractables permettant d'adapter le réservoir de stockage en fonction des conditions climatiques liées à la source externe.

12 - Dispositif selon la revendication 1, caractérisé en ce que les conduites d'arrivée (10) et de retour (12) du circuit d'alimentation de la source externe de chaleur passent à l'intérieur du tube-écran (24) et débouchent dans la partie inférieure du réservoir de stockage à travers des orifices (32, 34) percés dans la paroi du tube-écran.

13 - Dispositif selon l'une des revendications précédentes, caractérisé en ce que la source d'appoint est constituée par une résistance électrique.

14 - Dispositif selon l'une des revendications 1 à 12, caractérisé en ce que la source d'appoint est constituée par un é changeur de chaleur.

15 - Installation de chauffage utilisant un dispositif selon l'une des revendications précédentes et comportant une pompe de circulation (16), une thermovanne (41) ou une unité centrale de régulation, caractérisée en ce que lesdits éléments sont groupés en un ensemble unitaire enfermé dans un boîtier (42) venant se fixer sous la plaque de fond (22) du réservoir de stockage.

FIG.1

FIG. 2

FIG. 3A

FIG. 3 B

FIG. 4